# EUROPÄISCHE PATENTSCHRIFT

(11) **EP 0 936 982 B1**
(45) Veröffentlichungstag und Bekanntmachung des Hinweises auf die Patenterteilung: **23.08.2000**
(21) Anmeldenummer: 97943865.2
(22) Anmeldetag: 18.09.1997
(51) Int. Cl.: B60S 1/32, B60S 1/38

(54) **WISCHHEBEL EINER FAHRZEUGSCHEIBENWISCHERVORRICHTUNG**
WIPER ARM ASSEMBLY FOR A VEHICLE WINDSHIELD WIPER DEVICE
BRAS D'ESSUIE-GLACE POUR VEHICULES

(30) Priorität: 15.11.1996 DE 19647347
(43) Veröffentlichungstag der Anmeldung: 25.08.1999
(73) Patentinhaber: ITT MANUFACTURING ENTERPRISES, INC., Wilmington, Delaware 19801 (US)
(72) Erfinder: FINK, Andreas, D-71723 Grossbottwar (DE)
(74) Vertreter: Dreiss, Fuhlendorf, Steimle & Becker
(86) Internationale Anmeldenummer: EP9705120
(87) Internationale Veröffentlichungsnummer: WO9822317

(56) Entgegenhaltungen:
- DE-A- 3 744 237
- DE-A- 4 314 414
- DE-A- 19 605 428
- FR-A- 2 526 382

## Beschreibung

Die Erfindung bezieht sich auf einen Wischhebel einer Fahrzeugscheibenwischervorrichtung mit den Merkmalen des Oberbegriffs des Anspruchs 1.

Ein Wischhebel mit den Merkmalen des Oberbegriffs des Anspruchs 1 ist bereits aus der DE 37 44 237 A1 bekannt. Der Wischarm ist mit einer zusätzlichen Stützeinrichtung ausgestattet, die starr an der Wischstange des Wischarmes befestigt ist und an dem der Wischerwelle zugewandten, inneren Schenkel des Wischblatttraggestells angreift. Dieses Stützelement hat die Aufgabe, das Wischblatt in der bzw. entgegen der Wischrichtung des Wischarmes abzustützen, um unerwünschte Rattererscheinungen der Wischleiste auf der zu wischenden Scheibe beim Betrieb der Scheibenwischervorrichtung zu unterbinden. Diese Rattererscheinungen führen einerseits zu einer lästigen Geräuschbildung, andererseits entstehen auf der Fahrzeugscheibe sogenannte Rattermarken, welche in erheblichem Maße die Sicht behindern können. Da das Wischblattgestell aber aus einem harten Material besteht, ist die erreichbare Dämpfung der Rattergeräusche bei einem solchen Wischhebel noch nicht befriedigend. Andererseits befriedigt auch nicht die erreichbare Dämpfung der Rattererscheinung selbst, weil die auf der zu wischenden Scheibe aufliegende Wischleiste aufgrund ihrer Elastizität entsprechend verformbar ist und außerdem funktionsbedingt mit einem gewissen Spiel am Traggestell des Wischblattes gehalten und geführt ist.

Aufgabe der Erfindung ist es, bei einem Wischhebel mit den Merkmalen des Oberbegriffs des Anspruchs 1 durch einfache und kostengünstige Maßnahmen eine wirkungsvolle Unterdrükkung der unerwünschten Rattererscheinung des Wischblattes auf der zu wischenden Scheibe zu erreichen.

Erfindungsgemäß wird die Aufgabe durch einen Wischhebel mit den Merkmalen des Anspruchs 1 gelöst. Dadurch, daß die zusätzliche, starr mit dem Wischarm verbundene Stützeinrichtung unmittelbar an der Wischleiste des Wischblattes angreift wird deren seitliches Ausschwingen um eine im wesentlichen senkrecht auf der zu wischenden Scheibe stehende, gedachte Achse, welches die unerwünschten Rattererscheinungen erzeugt, wirkungsvoll unterbunden. Ein zusätzlicher Vorteil ergibt sich daraus, daß das Stützelement unmittelbar an der aus gummielastischem Material gefertigten Wischleiste angreift. Diese Materialpaarung der Stützeinrichtung einerseits und der Wischleiste andererseits verhindert eine störende Geräuschentwicklung, welche beim bekannten Stand der Technik durch den Kontakt zwischen der Stützeinrichtung und dem Traggestell des Wischblattes entsteht.

Vorteilhafte Weiterbildungen der Erfindung ergeben sich aus den Unteransprüchen.

Eine Weiterbildung gemäß Anspruch 2 sieht vor, daß die Wischleiste zumindest in denjenigen Abschnitten an ihren gegenüberliegenden Längsseiten eine oder mehrere nach auswärts abstehende Stützrippen oder Stützlamellen aufweist, die sich an den Innenseiten der zu der Stützeinrichtung gehörenden Schenkel abstützen. Durch diese Maßnahme ist eine sichere seitliche Abstützung und Führung der Wischleiste an der Stützeinrichtung gewährleistet, insbesondere dann, wenn zusätzlich eine bevorzugte Weiterbildung gemäß Anspruch 3 zur Anwendung kommt, wonach die Wischleiste spielfrei an den Innenseiten der Schenkel der Stützeinrichtung geführt ist.

Hinsichtlich der Vermeidung einer Geräuschbildung ist diese Weiterbildung ebenfalls von Vorteil, weil über dünne bzw. flache Stützrippen bzw. Stützlamellen Schwingungen nur in wesentlich geringerem Umfange übertragen werden können als über einen massiven Körper. Wenn hierbei die Wischleiste durch Gießen in eine Form hergestellt ist, kann die Variante, welche die Stützrippen bzw. die Stützlamellen nur an den Abschnitten vorsieht, an denen die Wischleiste das Stützelement kontaktiert, im Sinne einer Materialeinsparung von Vorteil sein. Ist jedoch eine kostengünstig durch Extrudieren hergestellte Wischleiste für das Wischblatt vorgesehen, so empfiehlt sich eine alternative Variante, wonach sich die seitlichen Stützrippen bzw. Stützlamellen über die gesamte Länge der Wischleiste erstrecken.

Aus gegenwärtiger Sicht wird eine Weiterbildung der Erfindung gemäß Anspruch 4 als besonders vorteilhaft betrachtet. Hiernach ist vorgesehen, daß die Stützeinrichtung an dem inneren Endabschnitt der Wischleiste angreift. Unter dem inneren Endabschnitt der Wischleiste ist derjenige Endabschnitt zu verstehen, der sich an dem der Wischerwelle zugewandten Ende der Wischleiste befindet und aus dem Traggestell des Wischblattes herausragt. Beim Betrieb der Scheibenwischervorrichtung führt die Wischleiste eine kreisbogenförmige Bewegung auf der zu wischenden Scheibe aus. Dabei ist die Umfangsgeschwindigkeit am inneren Ende der Wischleiste am kleinsten, mit zunehmender Entfernung von der Wischerwelle wird die Umfangsgeschwindigkeit immer größer und ist natürlich am äußeren Ende der Wischleiste am größten. Es hat sich inzwischen gezeigt, daß der Einfluß des inneren Endes der Wischleiste auf die Entstehung der Rattererscheinungen am größten ist, weil die Umfangsgeschwindigkeit dieses inneren Endes am kleinsten ist. Deshalb kann der Entstehung der Rattererscheinungen am besten dadurch entgegengewirkt werden, daß die Abstützeinrichtung unmittelbar an diesem inneren Endabschnitt der Wischleiste und dabei am besten unmittelbar direkt am Ende der Wischleiste angreift.

Von Vorteil ist weiterhin eine Ausgestaltung der Erfindung gemäß Anspruch 5, welche vorsieht, daß die Stützeinrichtung mit dem Gelenkteil des Wischarmes verbunden ist, vor allem dann, wenn außerdem die Stützeinrichtung gemäß Anspruch 6 einstückig mit dem Gelenkteil des Wischarmes gefertigt ist. Die einstückige Fertigung der Stützeinrichtung mit dem Gelenkteil gewährleistet eine besonders große Stabilität der zusätzlichen Stützeinrichtung. Andererseits ist diese Maßnahme kostengünstig umzusetzen, egal ob das Gelenkteil aus Kunststoffmaterial und dabei vorrangig als Spritzgußteil, oder ob das Gelenkteil als Stanz- und Biegeteil aus Blech gefertigt ist.

Es kann auch eine Weiterbildung gemäß Anspruch 7 von Vorteil sein, wonach die zusätzliche Stützeinrichtung ein separates Bauteil ist, welches starr mit dem Wischarm bzw. mit dem Gelenkteil des Wischarmes verbunden ist. Diese Weiterbildung bietet neben den anderen Vorteilen insbesondere die Möglichkeit, bereits vorhandene Wischhebel mit der separaten Stützeinrichtung nachzurüsten.

Anhand einer Zeichnung wird nachfolgend ein Ausführungsbeispiel der Erfindung näher beschrieben. In der Zeichnung zeigen:
- Fig. 1: in teilweise geschnittener Darstellung einen Wischhebel und
- Fig. 2: in vergrößerter und teilweise geschnittener Darstellung ein Detail aus Fig. 1.

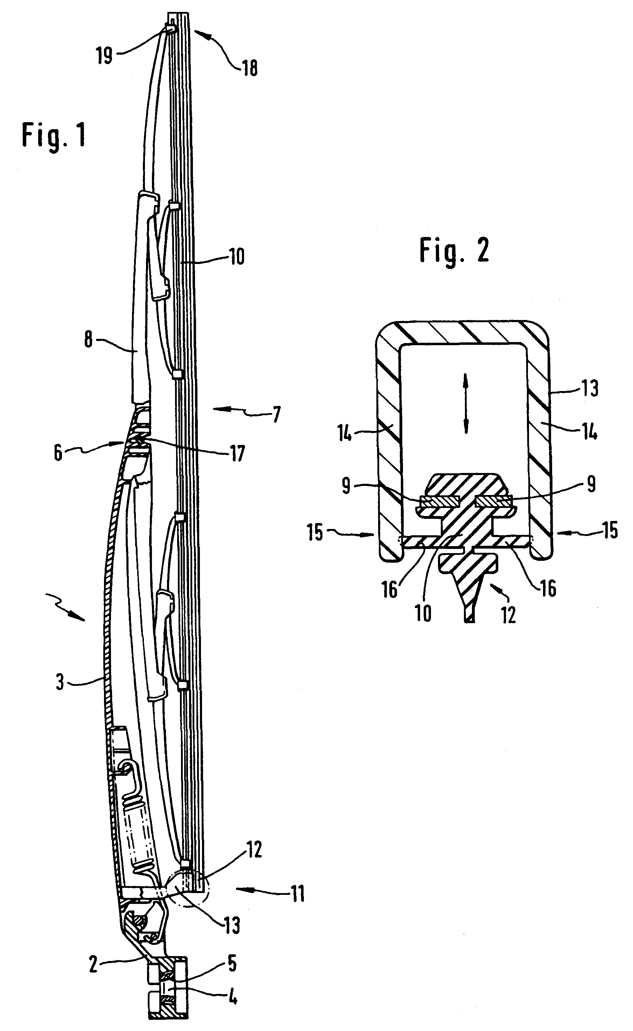

Der in Fig. 1 gezeigte Wischhebel einer Fahrzeugscheibenwischervorrichtung kann sowohl zum Reinigen der Frontscheibe als auch der Heckscheibe des Fahrzeuges bestimmt sein. Der Wischhebel hat einen Wischarm 1, der von einem Befestigungsteil 2 und einem Gelenkteil 3 gebildet ist, wobei das Gelenkteil 3 schwenkbar mit dem Befestigungsteil 2 verbunden ist. Sowohl das Befestigungsteil 2 als auch das Gelenkteil 3 sind aus Kunststoffmaterial hergestellt, das Befestigungsteil 2 ist jedoch im Bereich einer konischen Aufnahmeöffnung 4 für das Ende einer nicht dargestellten, pendelnd antreibbaren Wischerwelle mit einer Metalleinlage 5 ausgestattet. Das freie Ende des als Spritzgußteil hergestellten Gelenkteiles 3 ist unmittelbar als Verbindungsstück 6 für die schwenkbare Verbindung mit dem Wischblatt 7 ausgebildet. Das Wischblatt 7 weist ein Traggestell 8 auf, das aus einem Hauptbügel und aus mehreren untergeordneten Bügeln und/oder Krallenbügeln zusammengesetzt ist, welche schwenkbar miteinander verbunden sind. In an sich bekannter Weise ist eine mit Federschienen 9 bestückte, aus gummielastischem Material bestehende Wischleiste 10 an dem Traggestell 8 gehalten und geführt. Die Wischleiste 10 ist länger als das Traggestell 8, so daß, insbesondere an dem der Wischerwelle benachbarten, inneren Ende 11, ein Endabschnitt 12 der Wischleiste 10 aus dem Traggestell 8 herausragt. Direkt an diesem Endabschnitt 12 greift eine zusätzliche Stützeinrichtung 13 an, welche einstückig mit dem Gelenkteil 3 des Wischarmes 1 gefertigt ist.

Aus Fig. 2 ist ersichtlich, daß die zusätzliche Stützeinrichtung 13 zwei voneinander beabstandete, parallele Schenkel 14 aufweist, die an das Gelenkteil 3 einstückig angeformt sind und sich im wesentlichen in Richtung auf die zu wischende Scheibe erstrecken. Der Endabschnitt 12 der Wischleiste 10 stützt sich direkt an den Innenseiten der Schenkel 14 ab und ist dadurch an diesen Schenkeln 14 geführt. Aus diesem Sachverhalt ergibt sich, daß sich an den gegenüberliegenden Längsseiten des Endabschnittes 12 diejenigen Abschnitte 15 der Wischleiste 10 befinden, welche sich direkt an den Innenseiten der beiden Schenkel 14 der Stützeinrichtung 13 abstützen. In Fig. 2 ist noch zu erkennen, daß die Wischleiste 10 an ihren gegenüberliegenden Längsseiten jeweils eine Stützrippe 16 aufweist, welche nach auswärts absteht und die übrige Kontur der mit den Federschienen 9 bestückten Wischleiste 10 seitlich überragt. Die Stützrippen 16 stützen sich mit leichter elastischer Vorspannung an den Innenseiten der Schenkel 14 ab, wodurch jedoch nicht die erforderliche Verschwenkbarkeit des Wischblattes 7 um die mit dem Gelenkteil 3 gemeinsame Schwenkachse 17 beeinträchtigt wird. Diese elastische Vorspannung der Stützrippen 16 gewährleistet eine sichere und spielfreie Führung der Wischleiste 10 an den Schenkeln 14 der Stützeinrichtung 13 in allen Betriebszuständen des Wischhebels. Beim Betrieb der Scheibenwischervorrichtung paßt sich die elastische Wischleiste 10 der Scheibenkontur an, und das Wischblatt 7 wird gegenüber dem Gelenkteil 3 um die Schwenkachse 17 verschwenkt. Im Hinblick auf die Stützeinrichtung 13 bedeutet dieses, daß sich beim Betrieb der Scheibenwischervorrichtung die Wischleiste 10 zwischen den beiden Schenkeln 14 der Stützeinrichtung 13 in Richtung des Doppelpfeiles (Fig. 2) auf- und abbewegt.

Aus Fig. 1 ist noch zu erkennen, daß der Endabschnitt 12, in dem die Stützeinrichtung 13 an der Wischleiste 10 eingreift, sich in einem größtmöglichen Abstand von der Schwenkachse 17, in welcher das Wischblatt 7 mit dem Gelenkteil 3 verbunden ist, befindet. Dadurch wird ein sehr großer Hebelarm gebildet, wodurch die auf die Stützeinrichtung 13 bzw. deren Schenkel 14 einwirkenden Kräfte entsprechend gering sind.

Aus Fig. 1 ist noch ersichtlich, daß entgegen der ansonsten allgemein üblichen Anordnung die Wischleiste 10 am äußeren Ende 18 durch das äußere Krallenpaar 19 des Traggestells 8 in Längsrichtung an dem Traggestell 8 fixiert ist. Dieses erfolgt dadurch, daß die Krallen des Krallenpaares 9 in entsprechende Ausnehmungen in den Längsseiten der Wischleiste 10 eingreifen.

### Bezugszeichenliste

- 1: Wischarm
- 2: Befestigungsteil
- 3: Gelenkteil
- 4: Aufnahmeöffnung
- 5: Metalleinlage
- 6: Verbindungsstück
- 7: Wischblatt
- 8: Traggestell
- 9: Federschiene
- 10: Wischleiste
- 11: Inneres Ende
- 12: Endabschnitt
- 13: Stützeinrichtung
- 14: Schenkel
- 15: Abschnitt
- 16: Stützrippe
- 17: Schwenkachse
- 18: Äußeres Ende
- 19: Äußeres Krallenpaar

## Patentansprüche

1. Wischhebel einer Fahrzeugscheibenwischervorrichtung, bestehend aus einem auf einer Wischerwelle befestigbaren Wischarm (1) und einem Wischblatt (7), welche schwenkbar miteinander verbunden sind, wobei das Wischblatt (7) ein Traggestell (8) und eine an dem Traggestell (8) gehaltene und geführte gummielastische Wischleiste (10) aufweist und eine zusätzliche Stützeinrichtung (13) starr mit dem Wischarm (1) verbunden ist, welche in einem Abstand von der zwischen dem Wischarm (1) und dem Wischblatt (7) gebildeten Schwenkachse (17) an dem Wischblatt (7) angreift und dieses in der bzw. entgegen der Wischrichtung abstützt, dadurch **gekennzeichnet**, daß die zusätzliche Stützeinrichtung (13) an der Wischleiste (10) angreift.

2. Wischhebel nach Anspruch 1, wobei die Stützeinrichtung (13) zwei parallele Schenkel (14) aufweist, die sich mit ihren freien Enden in Richtung auf die zu wischende Scheibe erstrecken und an deren Innenseiten sich Abschnitte (15) der gegenüberliegenden Längsseiten der Wischleiste (10) abstützen, dadurch **gekennzeichnet**, daß die Wischleiste (10) zumindest in den Abschnitten (15), vorzugsweise jedoch über ihre gesamte Länge, an den gegenüberliegenden Längsseiten eine oder mehrere nach auswärts abstehende Stützrippen (15) bzw. Stützlamellen aufweist, die sich an den Innenseiten der Schenkel (14) der Stützeinrichtung (13) abstützen.

3. Wischhebel nach Anspruch 2, dadurch **gekennzeichnet**, daß die Wischleiste (10) an den Innenseiten der Schenkel (14) der Stützeinrichtung (13) spielfrei geführt ist.

4. Wischhebel nach einem der vorhergehenden Ansprüche, wobei die Wischleiste (10) länger ist als das Traggestell (8) und zumindest an dem der Wischerwelle zugewandten, inneren Ende (11) des Wischblattes (7) ein innerer Endabschnitt (12) der Wischleiste (10) das Traggestell (8) längs überragt, dadurch **gekennzeichnet**, daß die zusätzliche Stützeinrichtung (13) an dem inneren Endabschnitt (12) der Wischleiste (10) angreift.

5. Wischhebel nach einem der vorhergehenden Ansprüche, dadurch **gekennzeichnet**, daß die zusätzliche Stützeinrichtung (13) starr mit dem Gelenkteil (3) des Wischarmes (1) verbunden ist.

6. Wischhebel nach Anspruch 5, dadurch **gekennzeichnet**, daß die zusätzliche Stützeinrichtung (13) einstückig mit dem Gelenkteil (3) des Wischarmes (1) gefertigt ist.

7. Wischhebel nach Anspruch 5, dadurch **gekennzeichnet**, daß die zusätzliche Stützeinrichtung (13) ein separates Bauteil ist.

## Claims

1. Wiper arm assembly for a vehicle windshield wiper device consisting of a wiper arm (1) affixable on a wipershaft and a wiper blade (7), which are pivotably joined together, while the wiper blade (7) has a carrier frame (8) and a rubbery elastic wiper strip (10) held and guided on the carrier frame (8) and an additional support element (13) is rigidly joined to the wiper arm (1), which, at a distance from the pivoting axis (17) formed between the wiper arm (1) and the wiper blade (7), engages on the wiper blade (7) and supports the latter in or counter to the wiping direction, characterized in that the additional support element (13) engages on the wiper strip (10).

2. Wiper arm assembly according to Claim 1, in which the support element (13) has two parallel legs (14), which extend with their free ends toward the windshield to be wiped and on the inner side sections (15) rest the opposite longitudinal sides of the wiper strip (10), characterized in that the wiper strip (10), at least in the sections (15) but preferably over its entire length, has on the opposite longitudinal sides one or more outward projecting support ribs (16) or support plates, which rest on the inner sides of the legs (14) of the support element (13).

3. Wiper arm assembly according to Claim 2, characterized in that the wiper strip (10) is guided without play on the inner sides of the legs (14) of the support element (13).

4. Wiper arm assembly according to one of the preceding claims, characterized in that the wiper strip (10) is longer than the carrier frame (8) and, at least on the inner end (11) of the wiper blade (7), an inner end section (12) of the wiper strip (10) longitudinally extends beyond the carrier frame (8), characterized in that the additional support element (13) engages on the inner end section (12) of the wiper strip (10).

5. Wiper arm assembly according to one of the preceding claims, characterized in that the additional support element (13) is rigidly joined to the hinged part (3) of the wiper arm (1).

6. Wiper arm assembly according to Claim 5, characterized in that the additional support element (13) is formed in one piece with the hinged part (3) of the wiper arm (1).

7. Wiper arm assembly according to Claim 5, characterized in that the additional support element (13) is a separate component.

## Revendications

1. Essuie-glace, d'un dispositif d'essuie-glace de véhicule, constitué d'un bras d'essuie-glace (1), pouvant être fixé sur un axe d'essuie-glace, et d'un balai d'essuie-glace (7) qui sont rendus solidaires l'un de l'autre d'une manière basculante, le balai d'essuie-glace (7) comprenant un porte-raclette (8) et une raclette (10) à élasticité du type caoutchouc qui est maintenue et guidée sur le porte-raclette (8), tandis qu'il est prévu, rendu solidaire rigideement du bras d'essuie-glace (1), un élément d'appui (13) supplémentaire qui agit sur le balai d'essuie-glace (7) à distance de l'axe de basculement (17) formé entre le bras d'essuie-glace (1) et le balai d'essuie-glace (7) et qui soutient ce balai d'essuie-glace (7) respectivement dans le sens de nettoyage et dans le sens opposé, caractérisé en ce que l'élément d'appui (13) supplémentaire agit sur la raclette d'essuie-glace (10).

2. Essuie-glace suivant la revendication 1, dans lequel l'élément d'appui (13) comporte deux ailes (14) parallèles qui sont orientées, par leurs extrémités libres, en direction de la glace à nettoyer et sur les faces intérieures desquelles s'appuient des sections (15) des faces longitudinales opposées de la raclette d'essuie-glace (10), caractérisé en ce que la raclette d'essuie-glace (10) comporte, au moins dans les sections (15), mais de préférence sur toute sa longueur, une ou plusieurs nervures d'appui (15) ou lamelles d'appui qui sont formées sur les faces longitudinales opposées, se dressent vers l'extérieur et s'appuient sur les faces intérieures des ailes (14) de l'élément d'appui (13).

3. Essuie-glace suivant la revendication 2, caractérisé en ce que la raclette d'essuie-glace (10) est guidée sans jeu sur les faces intérieures des ailes (14) de l'élément d'appui (13).

4. Essuie-glace suivant l'une des revendications précédentes, dans lequel la raclette d'essuie-glace (10) est plus longue que le porte-raclette (8) et, au moins à l'endroit de l'extrémité intérieure (11), située du côté de l'axe d'essuie-glace, du balai d'essuie-glace (7), une section d'extrémité intérieure (12) de la raclette d'essuie-glace (10) teint dépasse en longueur du porte-raclette (8), caractérisé en ce que l'élément d'appui (13) supplémentaire agit sur la section d'extrémité intérieure (12) de la raclette d'essuie-glace (10).

5. Essuie-glace suivant l'une des revendications précédentes, caractérisé en ce que l'élément d'appui (13) supplémentaire est solidaire rigidement de la partie articulée (3) du bras d'essuie-glace (1).

6. Essuie-glace suivant la revendication 5, caractérisé en ce que l'élément d'appui (13) supplémentaire est réalisé d'une pièce avec la partie articulée (3) du bras d'essuie-glace (1).

7. Essuie-glace suivant la revendication 5, caractérisé en ce que l'élément d'appui (13) supplémentaire est une pièce séparée.
